# FASCICULE DE BREVET EUROPEEN

(11) **EP 1 789 322 B1**
(45) Date de publication et mention de la délivrance du brevet: **09.04.2008**
(21) Numéro de dépôt: 05805593.0
(22) Date de dépôt: 06.09.2005
(51) Int. Cl.: B64D 39/06

(54) **DISPOSITIF POUR LE RACCORDEMENT EN VOL D 'UN AERONEF A UN DISPOSITIF DE RAVITAILLEMENT EN CARBURANT D 'UN AVION RAVITAILLEUR**
VORRICHTUNG ZUM IN-FLIGHT-VERBINDEN EINES FLUGZEUGS AN EINE TANKVORRICHTUNG EINES TANKFLUGZEUGS
DEVICE FOR CONNECTING IN FLIGHT AN AIRCRAFT TO A REFUELLING DEVICE OF A TANKER AEROPLANE

(30) Priorité: 16.09.2004 FR 0409808
(43) Date de publication de la demande: 30.05.2007
(73) Titulaire: AIRBUS France, 31060 Toulouse (FR)
(72) Inventeur: ARROUY, Pascal, F-82600 Aucamville (FR)
(74) Mandataire: Bonnetat, Christian
(86) Numéro de dépôt international: PCT/FR2005/002209
(87) Numéro de publication internationale: WO 2006/032747

(56) Documents cités:
- DE-B- 1 107 090
- GB-A- 695 200
- GB-A- 1 472 296

## Description

La présente invention concerne un dispositif pour le raccordement en vol d'un aéronef à un dispositif de ravitaillement en carburant d'un avion ravitailleur.

Ces dispositifs de raccordement équipent notamment les avions militaires tels que certains avions de chasse ou de transport de troupes et/ou de matériels, ainsi que des hélicoptères, qui, pour mener à bien leur mission, doivent être ravitaillés en carburant durant leur vol.

Le ravitaillement en carburant s'effectue à partir d'un avion ravitailleur sur lequel est prévu au moins un dispositif de raccordement comportant un tuyau de ravitaillement ou analogue en communication fluidique avec au moins un réservoir concerné de l'avion ravitailleur et qui, après connexion avec le dispositif de raccordement de l'avion à ravitailler, assure le transfert de carburant du ou des réservoirs de l'avion ravitailleur vers le ou les réservoirs de l'avion ravitaillé.

Bien entendu, l'avion ravitailleur peut être lui-même équipé d'un dispositif de raccordement pour être, à son tour, ravitaillé en carburant en vol à partir d'un autre avion ravitailleur.

Les documents GB 1 472 296 et GB 1 107 090 décrivent un dispositif de raccordement pour le ravitaillement en vol comportant une perche de raccordement mobile.

Les dispositifs de raccordement actuellement utilisés à bord des aéronefs ravitaillés comprennent généralement :
- une perche de raccordement fixe, creuse et apte à coopérer par son extrémité distale avec le dispositif de ravitaillement de l'avion ravitailleur ; et
- une structure de support, fixée à la structure de l'aéronef ravitaillé, notamment en partie haute et à l'avant du fuselage dans son plan longitudinal de symétrie, ladite structure de support servant de base fixe à ladite perche et étant pourvue d'un passage interne permettant de relier l'extrémité proximale de la perche de raccordement à un réservoir à remplir dudit aéronef ravitaillé.

Compte tenu des efforts engendrés sur la perche de raccordement au moment de la connexion avec le tuyau du dispositif de ravitaillement et durant le transfert du carburant, la structure de support qui reprend et encaisse les efforts (forces et moments) transmis par la perche, est conçue rigidement.

Selon un premier mode de réalisation connu, la structure de support comporte un corps de révolution à passage interne et trois supports portant le corps. Plus particulièrement, à la face avant du corps est reliée l'extrémité proximale de la perche de raccordement, tandis que la face arrière dudit corps est reliée à une tuyauterie fluidique pour amener le carburant circulant dans le passage interne du corps, au réservoir. Les trois supports répartis le long du corps sont, d'une part, fixés à celui-ci et, d'autre part, reposent extérieurement sur la peau du fuselage en étant également fixés à des cadres structuraux transversaux du fuselage, situés intérieurement par rapport à la peau, par l'intermédiaire d'organes de fixation.

Les trois supports constituent alors des liaisons encastrées vis-à-vis des cadres ayant pour but de transmettre les efforts dans les cadres, tandis que le corps de révolution s'oppose au moment de flexion imposé par la perche.

Selon un second mode de réalisation également connu, la structure de support de la perche se compose également de trois supports fixés aux cadres structuraux du fuselage par l'intermédiaire de la peau et reliés fixement entre eux par des plaques de façon à définir une structure du type à caisson, très rigide dont l'intérieur forme le passage interne. La perche de raccordement est fixée, par son extrémité proximale, au support avant de la structure à caisson. Ce mode de réalisation permet d'abaisser l'intensité des contraintes dans l'encastrement avec la structure de l'avion, mais a pour inconvénient d'ajouter un noeud rigide et quasi-indéformable sur le fuselage.

Bien qu'ils soient largement utilisés, ces dispositifs de raccordement présentent néanmoins des inconvénients, principalement en raison de leur rigidité.

En effet, si ces solutions encastrées permettent de reprendre efficacement les efforts s'exerçant sur la perche de raccordement et transmis par celle-ci durant sa connexion au dispositif de ravitaillement de l'avion ravitailleur, elles perturbent en revanche la structure environnante de l'avion ravitaillé, qui ne peut pas évoluer de façon optimale car tous les déplacements susceptibles de se produire sont bloqués à proximité de l'encastrement. En conséquence, comme la structure du fuselage est conçue pour pouvoir "respirer" durant le vol à la suite des variations de pression entre l'intérieur de l'avion et le milieu extérieur, le fait d'empêcher ces déplacements par la rigidité de la liaison "structure de support - structure du fuselage" peut conduire à l'apparition de criques dans celles-ci. Une solution consiste alors à renforcer la zone de la structure concernée afin de diminuer le niveau des contraintes, mais cela alourdit l'ensemble et rigidifie encore plus ladite zone, de sorte que la structure surdimensionnée encaisse davantage d'effort et que de nouvelles criques apparaissent.

Par exemple, les cadres structuraux ont une section transversale en C pour résister à la pression. Ainsi, l'âme de chaque cadre, perpendiculaire à la peau du fuselage, travaille en cisaillement et son aile inférieure ou talon permet d'éviter le gauchissement ou le déversement de l'âme, son aile supérieure étant fixée au support respectif par des fixations et la peau du fuselage. Si les efforts radiaux introduits par la perche dans la structure de support sont bien repris par l'âme de chaque support, en revanche, l'effort axial impose un moment secondaire au cadre qui tend à entraîner le gauchissement de l'âme. Un renfort est alors adossé à l'âme pour rigidifier chaque support mais cette solution entraîne alors une augmentation du poids et l'augmentation de la rigidification entraîne l'apparition de criques.

La présente invention a pour but de remédier à ces inconvénients et concerne un dispositif de raccordement dont la conception de la structure de support permet notamment d'éviter la déformation des cadres, l'apparition de criques et l'utilisation de nombreux renforts.

A cette fin, selon l'invention, le dispositif de raccordement pour le ravitaillement en carburant, en vol, d'un aéronef ravitaillé tel qu'un avion, à partir d'un avion ravitailleur pourvu d'un dispositif de ravitaillement, ledit dispositif de raccordemuent **pouvant être** porté par ledit aéronef ravitaillé et comportant :
- une perche de raccordement fixe **pouvant être fixée en saillie à l'avant dudit aéronef ravitaillé, ladite perche étant** creuse et apte à coopérer avec ledit dispositif de ravitaillement dudit avion ravitailleur ; et
- une structure de support **prouvant être** fixée à la structure de fuselage dudit aéronef ravitaillé et servant de base **rigide** à ladite perche de raccordement, ladite structure de support étant pourvue d'un passage interne en communication avec ladite perche de raccordement,
caractérisé en ce que ladite structure de support comprend :
- un corps cylindrique tubulaire **dont l'axe longitudinal peut être disposé parallèlement au fuselage dudit aéronef ravitaillé ledit corps cylindrique** comportant ledit passage interne ;
- au moins deux paliers parallèles **entourant avec ajustement** ledit corps cylindrique, **respectivement à l'avant et à l'arrière de celui-ci, lesdits paliers pouvant être** fixés à ladite structure du fuselage, et aptes à reprendre les efforts radiaux **appliqués audit corps cylindrique et** engendrés et transmis par ladite perche de raccordement ; et
- un élément de blocage longitudinal dudit corps cylindrique selon son axe longitudinal **apte à** associer ledit corps **cylindrique** à ladite structure du fuselage et apte à reprendre les efforts axiaux **appliqués audit corps cylindrique et** engendrés et transmis par ladite perche de raccordement

Ainsi, en lieu et place de liaisons par encastrement de la structure de support du dispositif à la structure du fuselage qui transmettent indifféremment tous les efforts à la structure du fuselage et entraînent des déformations et l'apparition de criques sur celle-ci, la réalisation de la structure de support selon l'invention sous la forme d'un corps cylindrique tubulaire fixé, d'une part, par des paliers et, d'autre part, par un élément de blocage longitudinal permet de dissocier les efforts transmis par la perche de raccordement sur la structure du fuselage et d'éviter les inconvénients précités.

En effet, les paliers agissent comme des centrages courts capables de reprendre les efforts radiaux transmis par la perche au corps tubulaire tout en autorisant les rotations et, de façon limitée, les débattements angulaires permettant de suivre au mieux les mouvements de la perche, de sorte que les âmes des cadres structuraux parallèles auxdits paliers travaillent avantageusement et seulement dans leur plan et ainsi ne se déforment pas. L'élément de blocage longitudinal est quant à lui prévu pour empêcher le déplacement longitudinal et reprendre ainsi les efforts axiaux parallèles à la perche.

De préférence, lesdits paliers sont respectivement situés au droit des âmes des cadres transversaux de ladite structure du fuselage et fixés à ceux-ci par l'intermédiaire de la peau dudit fuselage, de sorte que les âmes des cadres, dans le même plan que les paliers, travaillent de façon optimale.

En particulier, lesdits paliers sont agencés sensiblement au voisinage des extrémités dudit corps cylindrique tubulaire et ledit élément de blocage longitudinal est situé entre lesdits paliers. Pour obtenir une telle liaison par centrage court, lesdits paliers ont une largeur relativement étroite comparativement à leur diamètre interne recevant, avec ajustement, ledit corps cylindrique tubulaire. De préférence, le rapport entre le diamètre interne et la largeur de chaque palier est de l'ordre de 10. Par exemple, les paliers peuvent être lisses ou à articulation élastique ou sphérique.

Dans un mode préféré de réalisation, ledit élément de blocage longitudinal comporte avantageusement au moins une plaque mince formant un voile, disposée selon le plan longitudinal vertical dudit corps, orthogonalement auxdits paliers, et reliant ledit corps à la peau de la structure du fuselage. On remarque que la plaque mince ainsi agencée, directement liée à la peau du fuselage, travaille en cisaillement et évite d'introduire un moment secondaire dans la structure du fuselage.

Les figures du dessin annexé feront bien comprendre comment l'invention peut être réalisée. Sur ces figures, des références identiques désignent des éléments semblables.

La figure 1 montre schématiquement le ravitaillement en vol d'un avion à ravitailler équipé d'un dispositif de raccordement selon l'invention par l'intermédiaire du dispositif de ravitaillement d'un avion ravitailleur.

La figure 2 est une vue schématique en coupe longitudinale du dispositif de raccordement.

La figure 3 montre en perspective schématique le rapport dimensionnel entre l'un desdits paliers et le corps cylindrique dudit dispositif.

La figure 4 est un exemple de réalisation dudit dispositif de raccordement.

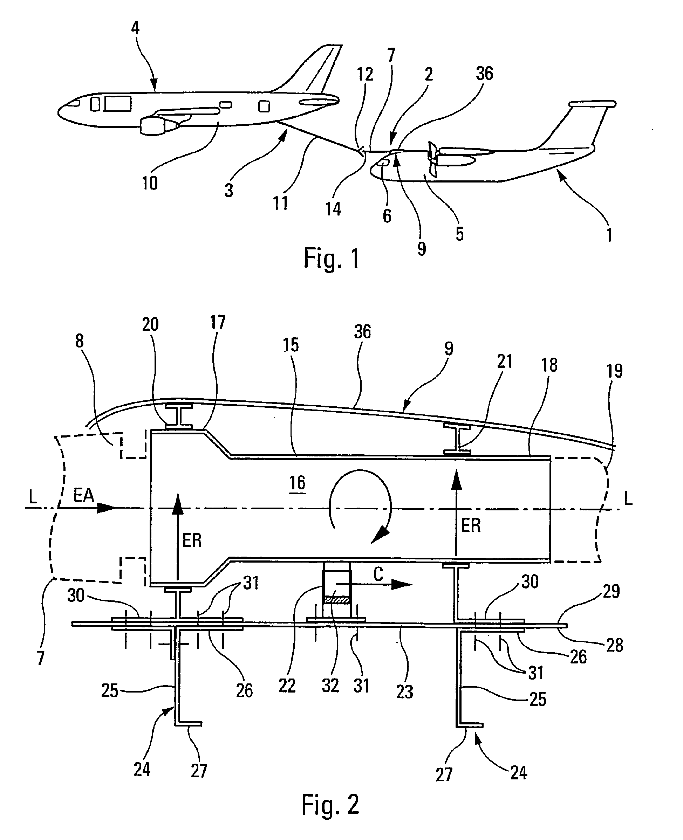

L'avion ravitaillé 1, représenté sur la figure 1, est équipé d'un dispositif de raccordement 2 apte à coopérer avec un dispositif de ravitaillement 3 prévu dans l'avion ravitailleur 4. Pour cela, le dispositif de raccordement 2 est situé à l'avant de la structure de fuselage 5 de l'avion ravitaillé 1 sensiblement dans son plan longitudinal de symétrie et au-dessus de la cabine de pilotage 6 et il comporte une perche de raccordement 7, fixe et creuse, faisant saillie de l'avant du fuselage et accouplée rigidement et avec étanchéité, par son extrémité proximale 8, à une structure de support 9. Celle-ci est solidaire de la structure du fuselage 5 et en communication fluidique avec un réservoir à remplir (non représenté). Cette structure de support 9 constitue ainsi une base fixée au fuselage 5 pour la fixation de la perche 7. Le dispositif de ravitaillement 3 est situé, dans le présent exemple, sous l'arrière du fuselage 10 de l'avion ravitailleur 4 et il comporte, par exemple, un tuyau de ravitaillement 11 issu d'une nacelle ou d'un treuil (non représenté) dans ledit fuselage 10. Le tuyau 11 se termine par un panier conique 12 de guidage, facilitant l'introduction et la connexion de l'extrémité distale 14 de la perche de raccordement 7.

Bien que l'on ait représenté sur la figure 1 un avion de transport 1 comme avion à ravitailler, il va de soi que le dispositif de raccordement 2 pourrait être monté sur d'autres types d'avions, tels que des avions de chasse.

Comme le montre la figure 2, la structure de support ou base portante 9 du dispositif de raccordement 2 se présente sous la forme d'un corps cylindrique tubulaire 15, à passage interne axial traversant 16 pour le transfert du carburant, l'axe longitudinal L-L du corps tubulaire étant sensiblement parallèle au fuselage 5 de l'avion 1. L'extrémité transversale avant 17 du corps reçoit fixement l'extrémité proximale 8 de la perche de raccordement 7, tandis que son extrémité transversale arrière 18 est raccordée de façon étanche à une tuyauterie de liaison 19 partiellement représentée en traits pointillés menant audit réservoir à remplir.

La structure de support 9 est liée à la structure du fuselage 5 et, pour cela, elle comporte avantageusement deux paliers parallèles 20, 21 entourant, avec ajustement, le corps cylindrique tubulaire 15 et fixés à la structure du fuselage 5, et un élément de blocage longitudinal 22 du corps fixé à ladite structure du fuselage.

Plus particulièrement, la structure du fuselage 5 de l'avion se compose principalement d'une peau métallique 23 constituant le revêtement du fuselage, et de cadres structuraux rigides 24 disposés transversalement le long de la peau, sous celle-ci. Ces cadres 24 ont une section transversale sensiblement en C et comportent chacun, comme on l'a indiqué précédemment, une âme verticale 25 terminée, d'un côté, par une semelle horizontale 26 coopérant avec la face interne 28 de la peau et, de l'autre côté, par un talon 27 sensiblement parallèle à la semelle et tourné vers l'intérieur du fuselage 5. Des revêtements internes non représentés sont appliqués et fixés aux talons des cadres.

Les deux paliers 20 et 21 portant le corps tubulaire 15 sont agencés de façon à se trouver au droit des âmes 25 des deux cadres concernés 24, en étant situés approximativement au niveau des extrémités respectives avant et arrière 17, 18 du corps. Pour leur fixation au fuselage, chaque palier 20, 21 se termine par une base 30 qui repose sur la face externe 29 de la peau 23, et des moyens de fixation 31 (tels que des boulons, des rivets, ou autres) symbolisés par leur axe géométrique, réunissent rigidement la semelle 26, la peau 23 et la base 30 de chaque palier 20, 21 à travers des trous ménagés en regard dans celles-ci.

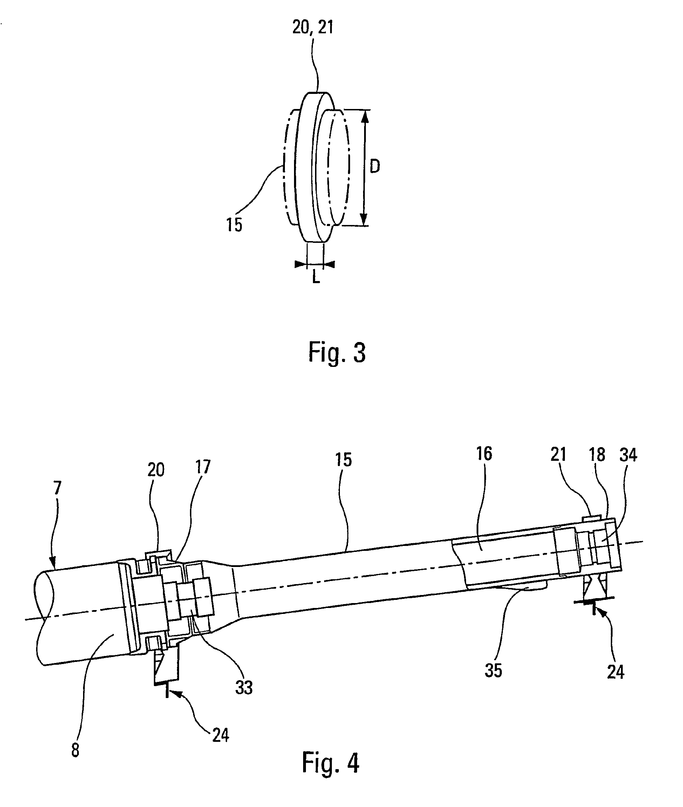

Ces deux paliers 20, 21 ainsi disposés constituent des centrages courts qui ont pour but de reprendre les efforts radiaux ER engendrés et transmis par la perche de raccordement 7 lors de sa connexion au tuyau de ravitaillement 11, tout en autorisant les rotations. Ainsi, cela a pour effet de faire travailler normalement chaque cadre 24 suivant son âme 25, c'est-à-dire dans son plan sans introduire d'autres efforts et/ou moments, et d'éviter tout gauchissement ou déversement des cadres et, de là, l'apparition de criques. Et cela, d'autant plus que l'âme de chaque cadre se trouve dans le prolongement de son palier, dans le même plan vertical sur la figure 2. Pour réaliser cette liaison par centrage court, le rapport entre la largeur L des paliers 20, 21 et le diamètre externe D du corps tubulaire 15 doit être significatif, par exemple égal à 10, comme le montre la figure 3. Par exemple, les paliers peuvent être lisses ou à articulation élastique ou sphérique autorisant des débattements angulaires limités.

Quant à l'élément de blocage longitudinal 22, destiné à reprendre les efforts axiaux EA issus de la perche selon l'axe L-L du corps tubulaire 15, il se présente sous la forme d'une plaque mince ou voile 32, comme le montre sa section transversale sur la figure 2. Cette plaque mince 32 relie le corps tubulaire 15 à la peau 23 du fuselage 5 par des moyens de fixation 31 et elle est située entre les paliers 20 et 21, avantageusement dans le plan longitudinal vertical de symétrie du fuselage 5, c'est-à-dire du corps tubulaire 15, de sorte qu'elle peut reprendre des efforts axiaux importants sans subir de déformation. Sous l'action de ces efforts, la plaque 32 travaille en cisaillement C repris normalement et directement par la peau dans son plan sans induire de moment secondaire.

Ainsi, grâce à la réalisation de la structure de support 9, les efforts transmis par la perche sont dissociés et décomposés en efforts radiaux repris par les paliers 20, 21 et en efforts axiaux repris par la plaque mince 32.

La figure 4 est une réalisation pratique du dispositif de raccordement 1, sur laquelle on voit que les extrémités avant 17 et arrière 18 du corps tubulaire 15 comprennent des raccords respectifs 33, 34 dans lesquels sont reçus fixement et avec étanchéité la perche de raccordement 7 d'une part et, d'autre part, la tuyauterie de carburant (non représentée) menant au réservoir à remplir, permettant le transfert du carburant de l'avion ravitailleur 4 au réservoir de l'avion ravitaillé 1 à travers le tuyau 11, la perche 7, le passage axial 16 du corps et la tuyauterie 19. Par ailleurs, une patte 35 pour la reprise de la plaque mince 32 fait saillie du corps cylindrique tubulaire 15, du côté de l'extrémité arrière 18.

En outre, comme le montrent notamment les figures 1 et 2, le dispositif de raccordement 2 comporte un carénage de protection 36 enveloppant le corps tubulaire 15, les paliers 20, 21 et les extrémités proximales de la perche 7 et de la tuyauterie 19, et s'appliquant contre la peau du fuselage.

## Revendications

1. Dispositif de raccordement (7, 9) pour le ravitaillement en carburant, en vol, d'un aéronef ravitaillé (1), tel qu'un avion, à partir d'un avion ravitailleur (4) pourvu d'un dispositif de ravitaillement (3, 11, 12), ledit dispositif de raccordement (7, 9) **pouvant être** porté par ledit aéronef ravitaillé (1) et comportant :
- une perche de raccordement fixe (7) **pouvant être fixée en saillie à l'avant dudit aéronef ravitaillé (1), ladite perche (7) étant** creuse et apte à coopérer avec ledit dispositif de ravitaillement (3, 11, 12) dudit avion ravitailleur (4) ; et
- une structure de support (9), **pouvant être** fixée à la structure de fuselage (5) dudit aéronef ravitaillé (1) et servant de base **rigide** à ladite perche de raccordement (7), ladite structure de support étant pourvue d'un passage interne (16) en communication avec ladite perche de raccordement (7),
**caractérisé en ce que** ladite structure de support (9) comprend :
- un corps cylindrique tubulaire (15) **dont l'axe longitudinal (L-L) peut être disposé parallèlement au fuselage (5) dudit aéronef ravitaillé (1), ledit corps cylindrique (15)** comportant ledit passage interne ;
- au moins deux paliers parallèles (20, 21) **entourant avec ajustement** ledit corps cylindrique (15), **respectivement à l'avant et à l'arrière de celui-ci, lesdits paliers pouvant être** fixés à ladite structure du fuselage, et aptes à reprendre les efforts radiaux (ER) **appliqués audit corps cylindrique (15) et** engendrés et transmis par ladite perche de raccordement (7) ; et
- un élément de blocage longitudinal (22) dudit corps cylindrique (15) selon son axe longitudinal **(L-L) apte à** associer ledit corps **cylindrique** à ladite structure du fuselage et apte à reprendre les efforts axiaux **appliqués audit corps cylindrique (15) et** engendrés et transmis par ladite perche de raccordement (7).

2. Dispositif selon la revendication 1,
**caractérisé en ce que** lesdits paliers (20, 21) peuvent respectivement être situés au droit des âmes (25) des cadres transversaux (26) de ladite structure du fuselage (5) et peuvent être fixés à ceux-ci par l'intermédiaire de la peau (23) dudit fuselage.

3. Dispositif selon l'une des revendications 1 ou 2,
**caractérisé en ce que** lesdits paliers (20, 21) sont agencés sensiblement au voisinage des extrémités (17, 18) dudit corps cylindrique tubulaire (15), et ledit élément de blocage longitudinal (22) est situé entre lesdits paliers.

4. Dispositif selon l'une des revendications 1 à 3,
**caractérisé en ce que** lesdits paliers (20, 21) ont une largeur relativement étroite comparativement à leur diamètre interne recevant, avec ajustement, ledit corps cylindrique tubulaire.

5. Dispositif selon la revendication 4,
**caractérisé en ce que** le rapport entre le diamètre interne et la largeur de chaque palier est de l'ordre de 10.

6. Dispositif selon l'une quelconque des revendications 1 à 5,
**caractérisé en ce que** lesdits paliers (20, 21) sont lisses ou à articulation élastique et sphérique.

7. Dispositif selon l'une quelconque des revendications 1 à 6,
**caractérisé en ce que** ledit élément de blocage longitudinal (22) comporte au moins une plaque mince (32) formant un voile, disposée selon le plan longitudinal vertical dudit corps, orthogonalement auxdits paliers (20, 21), et reliant ledit corps (15) à la peau de la structure du fuselage (5).

8. Aéronef (1) apte à être ravitaillé en carburant en vol, à partir d'un avion ravitailleur (4) pourvu d'un dispositif de ravitaillement (3, 11, 12),
**caractérisé en ce qu'**il comporte un dispositif de raccordement (7, 9) tel que spécifié sous l'une quelconque des revendications 1 à 7.

## Claims

1. A connecting device (7, 9) for the refueling, in flight, of a refueled aircraft (1), such as an airplane, from a tanker airplane (4) provided with a refueling device (3, 11, 12), said connecting device (7, 9) being able to be carried by said refueled aircraft (1) and comprising:
- a fixed connecting boom (7) being able to be fixed as a protrusion to the nose of said refueled aircraft (1), said connecting boom (7) being hollow and able to cooperate with said refueling device (3, 11, 12) of said tanker airplane (4); and
- a support structure (9) able to be fixed to the fuselage structure (5) of said refueled aircraft (1) and serving as rigid base fixed to said connecting boom (7), said support structure being provided with an internal passage (16) in communication with said connecting boom (7),
**characterized in that** said support structure (9) comprises,
- a tubular cylindrical body (15), of which the longitudinal axis (L-L) may be disposed parallel to the fuselage (5) of said refueled aircraft (1), said cylindrical body (15) comprising said internal passage;
- at least two parallel bearings (20, 21) fittingly surrounding said cylindrical body (15) respectively in the front part and in the rear part of this latter, said bearings being able to be fixed to said structure of the fuselage, and able to take up the radial loads (ER) applied to said cylindrical body (15) and engendered and transmitted by said connecting boom (7); and
- an element for longitudinal locking (22) of said cylindrical body (15) along its longitudinal axis (L-L), able to associate said cylindrical body with said structure of the fuselage and able to take up the axial loads applied to said cylindrical body (15) and engendered and transmitted by said connecting boom (7).

2. The device as claimed in claim 1,
**characterized in that** said bearings (20, 21) may be respectively situated in line with the webs (25) of the transverse frames (26) of said structure of the fuselage (5) and may be fixed to them by way of the skin (23) of said fuselage.

3. The device as claimed in one of claims 1 or 2,
**characterized in that** said bearings (20, 21) are arranged substantially in the neighborhood of the ends (17, 18) of said tubular cylindrical body (15), and said longitudinal locking element (22) is situated between said bearings.

4. The device as claimed in one of claims 1 to 3,
**characterized in that** said bearings (20, 21) have a relatively narrow width in comparison to their internal diameter receiving, with adjustment, said tubular cylindrical body.

5. The device as claimed in claim 4,
**characterized in that** the ratio of the internal diameter to the width of each bearing is of the order of 10.

6. The device as claimed in any one of claims 1 to 5,
**characterized in that** said bearings (20, 21) are smooth or have elastic and spherical articulation.

7. The device as claimed in any of claims 1 to 6,
**characterized in that** said longitudinal locking element (22) comprises at least one thin plate (32) forming a panel, disposed along the vertical longitudinal plane of said body, orthogonally to said bearings (20, 21), and joining said body (15) to the skin of the structure of the fuselage (5).

8. Aircraft (1) able to be refueled in flight, from a tanker airplane (4) provided with a refueling device (3, 11, 12),
**characterized in that** it comprises a connecting device (7, 9) such as specified by anyone of claims 1 to 7.

## Patentansprüche

1. Verbindungsvorrichtung (7,9), um während des Fluges ein zu betankendes Luftfahrzeug (1), wie etwa ein Flugzeug, von einem mit einer Betankungsvorrichtung (3,11,12) ausgestatteten Tankflugzeug (4) aus zu betanken, wobei die Verbindungsvorrichtung (7, 9) von dem zu betankenden Luftfahrzeug (1) tragbar ist und umfasst:
- eine feste Verbindungsstange (7), die vorne am zu betankenden Luftfahrzeug (1) vorstehend befestigt werden kann, wobei die Stange (7) hohl ist und dazu geeignet, mit der Betankungsvorrichtung (3,11,12) des Tankflugzeugs (4) zusammenzuwirken und
- eine Tragestruktur (9), die an der Struktur des Rumpfes (5) des zu betankenden Luftfahrzeugs (1) befestigbar ist und als steife Basis für die Verbindungsstange (7) dient, wobei die Tragestruktur mit einem inneren Durchlass (16) ausgestattet ist, der mit der Verbindungsstange (7) in Verbindung steht,
**dadurch gekennzeichnet, dass** die Tragestruktur (9) Folgendes umfasst:
- einen zylindrischen röhrenförmigen Körper (15), dessen Längsachse (L-L) parallel zum Rumpf (5) des zu betankenden Luftfahrzeugs (1) anordnbar ist, wobei der zylindrische Körper (15) den inneren Durchlass aufweist;
- mindestens zwei parallele Lager (20, 21) die den zylindrischen Körper (15) jeweils vorne und hinten passgenau umschließen, wobei die Lager an der Struktur des Rumpfes befestigbar sind und geeignet, die auf den zylindrischen Körper (15) wirkenden Radialkräfte (ER) aufzunehmen, die von der Verbindungsstange (7) erzeugt und übertragen werden und
- ein Element (22) zur Längssperrung des zylindrischen Körpers (15) entsprechend seiner Längsachse (L-L), das geeignet ist, den zylindrischen Körper der Struktur des Rumpfs zuzuordnen und die auf den zylindrischen Körper (15) wirkenden Axialkräfte aufzunehmen, die von der Verbindungsstange (7) erzeugt und übertragen werden.

2. Vorrichtung nach Anspruch 1, **dadurch gekennzeichnet, dass** die Lager (20, 21 ) jeweils in Ausrichtung auf die Stege (25) der Querrahmen (26) der Struktur des Rumpfes (5) anordnbar und über die Haut (23) des Rumpfes an diesen befestigbar sind.

3. Vorrichtung nach Anspruch 1 oder 2, **dadurch gekennzeichnet, dass** die Lager (20, 21) im Wesentlichen im Bereich der Enden (17,18) des zylindrischen röhrenförmigen Körpers (15) angeordnet sind und das Längssperrelement (22) zwischen den Lagern angeordnet ist.

4. Vorrichtung nach einem der Ansprüche 1 bis 3, **dadurch gekennzeichnet, dass** die Lager (20,21) eine relativ geringe Breite haben im Vergleich zu ihrem Innendurchmesser, das den zylindrischen röhrenförmigen Körper passgenau aufnimmt.

5. Vorrichtung nach Anspruch 4,
**dadurch gekennzeichnet, dass** das Verhältnis zwischen dem Innendurchmesser und der Breite der Lager jeweils in der Größenordnung von 10 liegt.

6. Vorrichtung nach einem der Ansprüche 1 bis 5, **dadurch gekennzeichnet, dass** die Lager (20,21) glatt oder mit elastischen Kugelgelenken versehen sind.

7. Vorrichtung nach einem der Ansprüche 1 bis 6, **dadurch gekennzeichnet, dass** das Längssperrelement (22) mindestens eine dünne Platte (32) umfasst, die eine Umhüllung bildet, die entsprechend der vertikalen Längsebene des Körpers orthogonal zu den Lagern (20,21) angeordnet ist und den Körper (15) mit der Haut der Struktur des Rumpfes (5) verbindet.

8. Luftfahrzeug (1), das geeignet ist, während des Fluges von einem mit einer Betankungsvorrichtung (3,11,12) ausgestatteten Tankflugzeug (4) aus mit Treibstoff betankt zu werden, **dadurch gekennzeichnet, dass** es eine Verbindungsvorrichtung (7,9) wie die unter einem der Ansprüche 1 bis 7 spezifizierte umfasst.
